# EUROPÄISCHE PATENTSCHRIFT

(11) **EP 3 384 173 B1**
(45) Veröffentlichungstag und Bekanntmachung des Hinweises auf die Patenterteilung: **20.11.2019**
(21) Anmeldenummer: 16816192.5
(22) Anmeldetag: 25.11.2016
(51) Int. Cl.: F16D 13/70

(54) **KUPPLUNG MIT AUFGEPRESSTEM MITNEHMERKRANZ**
CLUTCH WITH PRESSED DRIVING RING
EMBRAYAGE COMPORTANT UNE COURONNE D'ENTRAÎNEMENT FIXÉE PAR PRESSION

(30) Priorität: 04.12.2015 DE 102015224261
(43) Veröffentlichungstag der Anmeldung: 10.10.2018
(73) Patentinhaber: Schaeffler Technologies AG & Co. KG, 91074 Herzogenaurach (DE)
(72) Erfinder: KIMMIG, Karl-Ludwig, 77883 Ottenhöfen (DE); KONSTANTINOV, Alexander, 77815 Bühl (DE)
(86) Internationale Anmeldenummer: PCT/DE2016/200549
(87) Internationale Veröffentlichungsnummer: WO 2017/092753

(56) Entgegenhaltungen:
- WO-A2-2015/144162
- DE-A1-102014 225 783

## Beschreibung

Die Erfindung betrifft eine Kupplung für ein Kraftfahrzeug, wie einen Pkw, einen Lkw oder ein anderes Nutzfahrzeug, mit einem verbrennungsmotorisch antreibbaren Schnittstellenbauteil, wie einem Ein- oder Zweimassenschwungrad, mit einer Gegendruckplatte, die zusammen mit einer Druckplatte zum Einklemmen einer Kupplungsscheibe ausgelegt / vorbereitet ist, und mit einem zumindest zur Gegendruckplatte separaten Mitnehmerkranz, der zum Drehmomentübertragen / Drehmomentverbringen von dem Schnittstellenbauteil zur Gegendruckplatte ausgelegt / vorbereitet ist.

Die Offenlegungsschrift DE 10 2014 216 277 A1 offenbart eine Reibungskupplung, die mit einem als Zweimassenschwungrad ausgestalteten Schnittstellenbauteil drehfest verbindbar ist.

Ebenfalls bekannt aus dem Stand der Technik sind Kraftfahrzeugantriebsstränge mit zuzudrückender Einfachkupplung. Hierbei ist ein Mitnehmerkranz mit einem Drehmomenteinleitorgan verbunden und mit einer Gegendruckplatte vernietet. Die Vernietung des Mitnehmerkranzes mit der Gegenplatte zieht zum einen eine komplexe Montage nach sich, und zum anderen wirkt sich die Vernietung negativ auf den vorhandenen Axialbauraum aus. Als Beispiel sei hier auf die DE 10 2014 225 783 A1 verwiesen.

Eine gattungsgemäße Vorrichtung ist auch aus der DE 10 2011 013 475 A1 bekannt. Diese offenbart eine Doppelkupplung mit einem ersten und einem zweiten Federelement.

Eine dritte Vorrichtung ist aus der Patentschrift EP 1 524 446 B1 bekannt. Diese offenbart ein Kupplungsaggregat mit mindestens zwei Reibungskupplungen, die jeweils mindestens eine Kupplungsscheibe aufweisen.

Vor dem Hintergrund dieser Druckschriften ist es die Aufgabe der vorliegenden Erfindung, die Nachteile aus dem Stand der Technik zu beheben, und insbesondere eine technische Vorrichtung zu offenbaren, die eine bauraumsparende Anbindung des Mitnehmerkranzes an die Gegendruckplatte einer Kupplung ermöglicht, und zeitgleich die Komplexität in der Montage senkt. Auch auf eine Gewichtsreduzierung der Kupplung zielt die Erfindung ab.

Dies wird erfindungsgemäß dadurch gelöst, dass der Mitnehmerkranz mit der Gegendruckplatte verpresst ist. Die Verpressung vermeidet zum einen den Einsatz von zusätzlichen Befestigungsmitteln und kann zudem den axial benötigten Bauraum verringern. Weiterhin ist mittels der Verpressung die Montage des Mitnehmerkranzes maßgeblich vereinfacht.

Vorteilhafte Ausführungsformen sind in den Unteransprüchen beansprucht und werden nachfolgend näher erläutert.

So ist es von Vorteil, wenn zwischen der Gegendruckplatte und dem Mitnehmerkranz eine Verzahnung vorhanden ist, welche zum Drehmomentübertragen dimensioniert ist, das heißt geometrisch und materiell beschaffen ist. Mittels dieser Verzahnung wird erreicht, dass der Mitnehmerkranz auch bei schwierigsten Betriebsbedingungen zuverlässig Drehmoment von dem Schnittstellenbauteil an die Gegendruckplatte weiterleitet.

Neben der kraftschlüssigen Verpressung, weist eine weitere Ausführungsform einen zusätzlichen Formschluss auf, um die Drehmomentübertragung schlupflos sicherzustellen. Dieser Formschluss wird über eine Verzahnung an zumindest einem der beiden Bauteile hervorgerufen.

Sobald der Mitnehmerkranz die Verzahnung, etwa als eine Außenverzahnung, ausbildet und/oder die Gegendruckplatten die Verzahnung, etwa als eine Innenverzahnung, ausbildet, ist eine robuste und stabile Drehmomentweitergabe zwischen den einzelnen Komponenten garantiert. Dadurch, dass die Verzahnung entweder vom Mitnehmerkranz oder von der Gegendruckplatte integral ausgebildet wird, entfällt ein zusätzliches Bauteil für die Verzahnung, was die Montagekomplexität sinken lässt.

Eine weitere vorteilhafte Ausführungsform ist dadurch gekennzeichnet, dass die Verzahnung durch eine mitnehmerkranzseitige Teilverzahnung und/oder eine gegendruckplattenseitige Teilverzahnung ausgebildet ist. Auf diese Weise bilden beide Komponenten einen Teil der Verzahnung aus, was die auftretenden Spitzenkräfte auf eine größere Fläche verteilt, was sich günstig auf die Kraftübertragung der Kupplung auswirkt.

Es ist außerdem vorteilhaft, wenn zwischen dem Material der Gegendruckplatte und dem Material des Mitnehmerkranzes ein Härteunterschied zwischen den jeweiligen Materialien besteht. Dies erleichtert den Verpressvorgang. Weiterhin wird durch jenen gewünschten Härteunterschied ein unerwünschter Materialabtrag bei einer der beiden Komponenten verhindert.

Eine weitere vorteilhafte Ausführungsform ist dadurch gekennzeichnet, dass der Mitnehmerkranz härter ist als die Gegendruckplatte. Alternativ dazu ist die Gegendruckplatte härter als der Mitnehmerkranz. Bei beiden Möglichkeiten ist davon auszugehen, dass eine zielführende Verbesserung gewährleistet ist, da sich das weichere Bauteil an das härtere Bauteil anschmiegt.

Ein weiterer Vorteil der erfindungsgemäßen Vorrichtung besteht darin, dass eine Axialverschub-Verbindungseinrichtung vorhanden ist, die ausgelegt ist, eine Axialbewegung des Mitnehmerkranzes relativ zur Gegendruckplatte, vorzugsweise in einer Richtung von ihr weg, zu behindern oder besser zu verhindern. Diese Axialverschub-Verhinderungseinrichtung erhöht somit die Betriebssicherheit der Vorrichtung, um auch bei dynamischen Bedingungen zum einen höchste Sicherheitsanforderungen zu erfüllen, zum anderen eine schlupflose Drehmomentübertragung zu gewährleisten.

Wenn der Mitnehmerkranz in das Material der Gegendruckplatte hineingedrückt, eingepresst und/oder eingestemmt ist, bewirkt dies eine effiziente Fertigung, eine simple Montage, eine hohe Betriebssicherheit und eine präzise Drehmomentübertragung.

Es ist auch vorteilhaft, wenn die Axialverschub-Verhinderungseinrichtung als ein integraler Bestandteil der Gegendruckplatte oder des Mitnehmerkranzes ausgebildet ist oder als ein separates Bauteil, wie eine Anschraubplatte, ausgebildet ist. Als integraler Bestandteil ist es möglich, die Axialverschub-Verhinderungseinrichtung bauraum- und gewichtssparend einzufügen. Sollte die alternative Ausgestaltung, nämlich die des separaten Bauteils vorgezogen werden, zieht dies den Vorteil nach sich, dass bspw. ein simples Zukaufteil die Funktion erfüllt. Dadurch, dass die Vorrichtung beide Varianten zulässt, erhöht sie ihre Flexibilität und somit den Wert der Erfindung.

Ebenfalls Teil der Erfindung ist ein Antriebsstrang mit einer Kupplung, wie sie zuvor beschrieben worden ist, und mit einem als Zweimassenschwungrad ausgebildeten Schnittstellenbauteil. Der Antriebsstrang ist dazu vorbereitet, den höchsten Anforderungen hinsichtlich des axialen Bauraums gerecht zu werden und zeitgleich eine hochpräzise und somit effiziente Drehmomenten- und Kraftübertragung zu gewährleisten. Weiterhin zeichnet er sich durch eine simple Montage aus.

Weiterhin deckt die Erfindung ein Verfahren zum Montieren einer Kupplung ab. Hierbei handelt es sich um eine erfindungsgemäße Kupplung, wobei der Mitnehmerkranz zum Eingehen eines Formschlusses in das Material der Gegendruckplatte gedrückt / gepresst wird. Somit bewirkt das Verfahren zum einen einen Formschluss, der die axiale Position des Mitnehmerkranzes relativ zur Gegendruckplatte definiert, zum anderen herrscht ein Reibkraftschluss, der eine Kraftübertragung / Drehmomentübertragung in Umfangsrichtung ermöglicht. Durch eine Verzahnung ist es auch möglich, die Kraftübertragung / Drehmomentübertragung mittels eines Formschlusses zu unterstützen. Das Verfahren besteht daraus, dass die beiden Komponenten des Mitnehmerkranzes und der Gegendruckplatte relativ zueinander bewegt und anschließend verpresst werden. Es handelt sich demnach um einen Verfahrensschritt, der zwei Komponenten starr miteinander verbindet.

Eine vorteilhafte Ausführungsform der erfindungsgemäßen Kupplung zeichnet sich dadurch aus, dass die Gegendruckplatte eine Spantasche besitzt, die zum Aufnehmen von beim Einsetzen des Mitnehmerkranzes in die Gegendruckplatte erzeugten Spänen bemessen ist. Somit wirken sich die bei der Verpressung anfallenden Partikel nicht negativ auf die Betriebssicherheit aus. Weiterhin gelangen auf diese Weise keine unerwünschten Partikel in den Kupplungsraum, was die Sauberkeit erhöht und die unerwünschte Rotationsreibung senkt.

Auch von Vorteil ist es, wenn die Axialverschub-Verbindungseinrichtung als Verstemmung, Verpressung, Vercrimpung und/oder Schweißverbindung, etwa als Schweißpunkt oder Schweißnaht, ausgebildet ist. All diese Möglichkeiten garantieren eine hochpräzise Drehmomentübertragung, was die Kraftübertragung im eingekoppelten Zustand optimiert.

Eine weitere vorteilhafte Ausführungsform zeichnet sich dadurch aus, dass die Gegendruckplatte einen Anschlag für den Mitnehmerkranz stellt. Dieser Anschlag definiert die axiale Position des Mitnehmerkranzes und ermöglicht es somit, die Kupplung ideal einzustellen.

Auch wenn der härtere Partner des Mitnehmerkranzes und der Gegendruckplatte einen kleineren Außen- / Innen-Durchmesser als der weichere Partner besitzt, resultieren daraus Vorteile. Auf diese Weise ist die Verpressung der Komponenten durch eine Formanpassung des weicheren Bauteils garantiert.

Es ist ebenfalls vorteilhaft, wenn zwischen dem Mitnehmerkranz und der Gegendruckplatte eine nietlose Verbindung besteht. Dies bewirkt den Entfall eines zusätzlichen Bauteils, was sich sowohl in der Gewichtsbilanz, als auch in der logistischen Lieferkette als positiv herausstellt.

Es ist weiterhin positiv, wenn eine Ausführungsform der Vorrichtung die Kupplung als Einfachkupplung oder bevorzugt als Doppelkupplung auslegt. Somit werden die Vorteile einer zugkraftununterbrechenden Doppelkupplung mit den Vorteilen der erfindungsgemäßen Kupplung kombiniert.

In anderen Worten kann gesagt werden, dass die vorliegende Erfindung eine bauraumsparende Anbindung eines Mitnehmerkranzes durch Aufpressen und axiales Sichern an einer Gegendruckplatte einer Kupplung offenbart. Die Druckplatten, die sich für die erfindungsgemäße Vorrichtung am besten eignen, sind aus Blech. Als Anbindungsstelle zwischen dem Mitnehmerkranz und der Gegendruckplatte bietet sich vor allem der Innendurchmesser der motorseitigen Gegendruckplatte an. Durch die Anbindung ist kein zusätzlicher axialer Bauraum nötig, weshalb die erfindungsgemäße Lösung sich vor allem für solche Kupplungen eignet, die mit besonders hohen Bauraumanforderungen zurechtkommen müssen. Es ist weiterhin möglich, den Mitnehmerkranz auch an andere Kupplungsteile nach der vorgestellten Methode anzubinden.

Die Verbindung der beiden Bauteile durch Aufpressen und anschließende axiale Sicherung wird begünstigt, wenn eines der Teile härter als das andere ist. Das härtere Teil weist dabei vorzugsweise eine Art von Verzahnung auf. Das weichere Teil weist gleichzeitig ausreichend Fügelänge, Material zum Verstemmen und einen axialen Anschlag auf. Hierbei ist auf eine geeignete Überdeckung zwischen der Verzahnung und dem Durchmesser des weicheren Teils zu achten. Die aufgepresste Verzahnung sorgt für die Momentenübertragung und die Verstemmung für die Übertragung der axialen Kräfte in der Verbindung. Somit findet eine Trennung der Funktion statt.

Die Verbindung selbst erfolgt hierbei in zwei Schritten. Zunächst wird die Verzahnung des härten Teils unter Kraftaufwand und das weichere Teil bis zum axialen Anschlag gedrückt. Hierbei ist es wichtig, dass eine ausreichend große Spantasche vorhanden ist, um das beim Eindrücken verschobene Material aufzunehmen. Als nächster Schritt folgt der des Verstemmens des weichen Materials, um das harte Teil zu sichern. Sowohl das Eindrücken der Mitnehmerkranzverzahnung in die Gegenplatte, als auch das Verstemmen der Gegenplatte um den Mitnehmerkranz, ist mit Hilfe von einfachem Pressen durchzuführen, was die Komplexität der Montage günstig beeinflusst.

Erfindungsgemäß liegt demnach eine nietlose Verbindung zwischen der Gegendruckplatte und dem Mitnehmerkranz vor. Hierbei erfolgt die Verbindung der beiden Komponenten durch ein spanloses Umformen wenigstens eines der beiden Verbindungspartner. Weiterhin erfolgt ein Einpressen des härteren Partners, meistens Mitnehmerkranzes, in den weicheren, also die Gegendruckplatte. Anschließend erfolgt eine Verstemmung. Mittels eines geeigneten Werkzeuges ist es erfindungsgemäß weiterhin möglich, beide dieser Schritte mit einem Werkzeug durchzuführen.

Vorteilhafterweise weist der härtere Partner einen kleineren Durchmesser auf als der weichere. Der weichere stellt eine Spantasche zur Aufnahme von verformtem Material zur Verfügung. Der weichere Partner weist weiterhin einen axialen Anschlag auf, gegen den der härtere Partner beim Eintreffen angelegt wird.

Die Erfindung wird nachfolgend mittels Figuren näher erläutert.

Es zeigen:
- Fig. 1: einen Längsschnitt durch eine Doppelkupplung, bei der eine Gegendruckplatte mittels eines Mitnehmerkranzes mit einem Schnittstellenbauteil verbunden ist;
- Fig. 2: eine Draufsicht auf einen Ausschnitt aus Mitnehmerkranz und Gegendruckplatte, mit einer Verzahnung.
- Fig. 3: eine schematische Zeichnung, in der der Mitnehmerkranz und die Gegenplatte verstemmt sind; und
- Fig. 4: eine schematische Zeichnung des ersten Verfahrensschrittes bei der Montage zwischen dem Mitnehmerkranz und der Gegenplatte;

Die Figuren sind lediglich schematischer Natur und dienen ausschließlich dem Verständnis der Erfindung. Die gleichen Elemente sind mit denselben Bezugszeichen versehen.

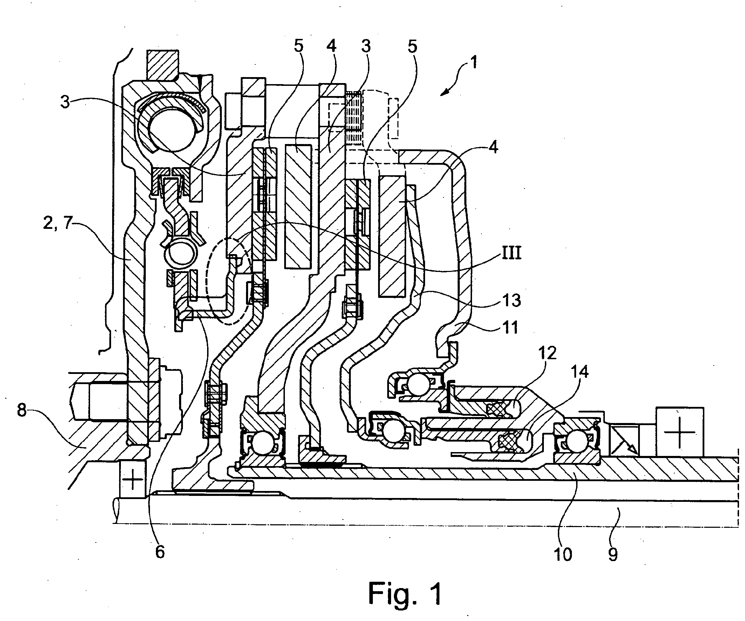

Fig. 1 zeigt eine Kupplung 1 für ein Kraftfahrzeug. Hierbei ist ein Schnittstellenbauteil 2 mit einer Gegendruckplatte 3 verbunden. Die im vorliegenden Fall präsentierte Kupplung 1 ist als Doppelkupplung ausgeführt und weist deshalb mehrere Gegendruckplatten 3 auf. Mittels einer bzw. mehrerer Druckplatten 4, die auch als Anpressplatten bezeichnet werden, werden Axialkräfte derart auf Kupplungsscheiben 5 ausgeübt, dass ein Drehmoment übertragbar ist. Ein Mitnehmerkranz 6 ist zwischen dem Schnittstellenbauteil 2 und der Gegendruckplatte 3 angeordnet.

Das Schnittstellenbauteil 2 ist im vorliegenden Beispiel als motorseitiges Schwungrad 7 in Form eines Zweimassenschwungrades ausgebildet. Um zwischen diesem motorseitigen Schwungrad 7 und der einen Gegendruckplatte 3, die getriebeseitig am nächsten am motorseitigen Schwungrad 7 angeordnet ist, herzustellen, ist der Mitnehmerkranz 6 vorhanden.

Die erfindungsgemäße Kupplung 1 stellt bei Bedarf eine Drehmomentübertragung zwischen einem kurbelwellenfesten Bauteil 8 und entweder einer getriebefesten Vollwelle 9 oder einer getriebefesten Hohlwelle 10 her. Ein erstes Betätigungsbauteil 11 wird von einer ersten Hydraulikkammer 12 derart angesteuert, dass ein Einkoppeln der Kupplung realisierbar ist. Alternativ dazu bewirkt ein zweites Betätigungsbauteil 13, das mittels der zweiten Hydraulikkammer 14 betätigt wird, ein Schließen der anderen Teilkupplung der Doppelkupplung.

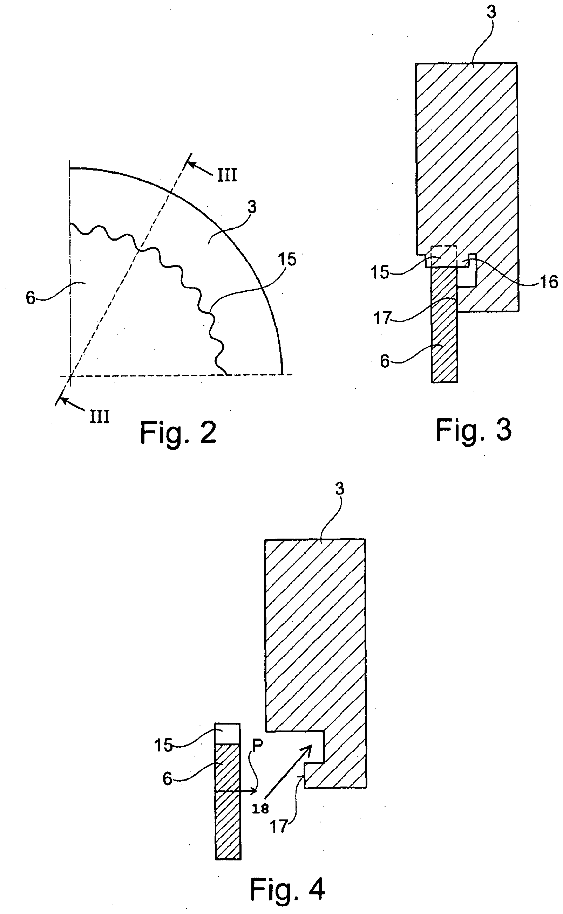

Der mit III referenzierte Kreis bei der Anbindung des Mitnehmerkranzes 6 in die dem motorseitigen Schwungrad 7 nächstgelegene Gegendruckplatte 3 ist in den Fign. 2 und 3 näher dargestellt.

Fig. 2 stellt die beiden Komponenten Mitnehmerkranz 6 und Gegendruckplatte 3 in der Draufsicht dar. Eine Verzahnung 15 ist hier wellenförmig ausgebildet. Auf diese Weise können der Formschluss und der Kraftschluss zusammenwirken, um eine präzise Drehmomentübertragung zu gewährleisten. Vorzugsweise ist hierbei die Verzahnung 15 am Mitnehmerkranz 6 angeordnet, während der innere Radius der Gegendruckplatte keine Gegenverzahnung aufweist sondern schlichtweg durch den Vorgang des Verpressens an die Form der Verzahnung 15 angepasst wird. Dies ist in der Schnittzeichnung aus Fig. 3, die mittels der Schnittlinie III-III in Fig. 2 angedeutet ist, deutlich dargestellt.

Fig. 3 zeigt die beiden Komponenten Mitnehmerkranz 6 und Gegendruckplatte 3 im zusammengebauten Zustand. Hierbei ragt ein Wulst 16 durch die Verpressung ausgebildet von Seiten der Gegendruckplatte 3 in die Hohlräume der Verzahnung 15 des Mitnehmerkranzes 6 hinein. Der Wulst 16 erhöht die Kontaktfläche der Gegendruckplatte 3 mit dem Mitnehmerkranz 6 und wird durch die Verzahnung 15 hervorgerufen.

Der Mitnehmerkranz 6 kontaktiert die Gegendruckplatte 3 weiterhin an einem axialen Anschlag 17, der die Montage vereinfacht, da er der Gegendruckplatte einen definitiven Anschlag verleiht. Weiterhin stellt der Anschlag ein bündiges Anliegen der Gegendruckplatte 3 am Mitnehmerkranz 6 sicher.

Fig. 4 zeigt die Gegendruckplatte 3 und den Mitnehmerkranz 6 im unmontierten Zustand. Ein Pfeil P zeigt an, in welcher Richtung der Mitnehmerkranz 6 bewegt wird, um mit der Gegendruckplatte 3 verpresst zu sein. Am radial äußeren Ende des Mitnehmerkranzes 6 ist die Verzahnung 15 sichtbar. Bei der Verpressung ist es alternativ auch möglich, die Gegendruckplatte 3 in Richtung des Mitnehmerkranzes 6 zu bewegen. In anderen Ausführungsformen können hierbei auch oder nur an der Gegendruckplatte 3 eine Verzahnung 15 ausgebildet sein.

Eine Spantasche 18, die für die Ausbildung des Wulstes 16 im verpressten Zustand benötigt wird, ist in Fig. 4 dargestellt. Die Spantasche 4 ist hierbei ausreichend groß ausgestaltet, um sämtliche bei der Verpressung anfallenden Späne aufnehmen zu können.

### Bezugszeichenliste

- 1: Kupplung
- 2: Schnittstellenbauteil
- 3: Gegendruckplatte
- 4: Druckplatte
- 5: Kupplungsscheibe
- 6: Mitnehmerkranz
- 7: motorseitiges Schwungrad
- 8: kurbelwellenfestes Bauteil
- 9: getriebefeste Vollwelle
- 10: getriebefeste Hohlwelle
- 11: erstes Betätigungsbauteil
- 12: erste Hydraulikkammer
- 13: zweites Betätigungsbauteil
- 14: zweite Hydraulikkammer
- 15: Verzahnung
- 16: Wulst
- 17: axialer Anschlag
- 18: Spantasche

- P: Pfeil

## Patentansprüche

1. Kupplung (1) für ein Kraftfahrzeug mit einem verbrennungsmotorisch antreibbaren Schnittstellenbauteil (2), mit einer Gegendruckplatte (3), die zusammen mit einer Druckplatte (4) zum Einklemmen einer Kupplungsscheibe (5) ausgelegt ist, und mit einem zumindest zur Gegendruckplatte (3) separaten Mitnehmerkranz (6), der zum Drehmomentübertragen von dem Schnittstellenbauteil (2) zur Gegendruckplatte (3) ausgelegt ist, **dadurch gekennzeichnet, dass** der Mitnehmerkranz (6) mit der Gegendruckplatte (3) kraftschlüssig und befestigungsmittellos verpresst ist

2. Kupplung (1) nach Anspruch 1, **dadurch gekennzeichnet, dass** ein zusätzlicher Formschluss zwischen der Gegendruckplatte (3) und dem Mitnehmerkranz (6) vorhanden ist.

3. Kupplung (1) nach Anspruch 2, **dadurch gekennzeichnet, dass** zwischen der Gegendruckplatte (3) und dem Mitnehmerkranz (6) eine Verzahnung (15) vorhanden ist, welche zum Drehmomentübertragen dimensioniert ist.

4. Kupplung (1) nach Anspruch 3, **dadurch gekennzeichnet, dass** der Mitnehmerkranz (6) die Verzahnung (15) ausbildet und/oder die Gegendruckplatte (3) die Verzahnung (15) ausbildet.

5. Kupplung (1) nach einem der Ansprüche 1 bis 4, **dadurch gekennzeichnet, dass** zwischen dem Material der Gegendruckplatte (3) und dem Material des Mitnehmerkranzes (6) ein Härteunterschied besteht.

6. Kupplung (1) nach einem der Ansprüche 1 bis 5, **dadurch gekennzeichnet, dass** der Mitnehmerkranz (6) härter ist als die Gegendruckplatte (3).

7. Kupplung (1) nach einem der Ansprüche 1 bis 6, **dadurch gekennzeichnet, dass** eine Axialschub-Verhinderungseinrichtung vorhanden ist, die ausgelegt ist, eine Axialbewegung es Mitnehmerkranzes (6) relativ zur Gegendruckplatte (3) zu behindern oder zu verhindern.

8. Kupplung (1) nach einem der Ansprüche 1 bis 7, **dadurch gekennzeichnet, dass** der Mitnehmerkranz (6) in das Material der Gegendruckplatte (3) hineingedrückt, eingepresst und/oder eingestemmt wird.

9. Kupplung (1) nach Anspruch 7 oder 8, **dadurch gekennzeichnet, dass** die Axialverschub-Verhinderungseinrichtung als ein integraler Bestandteil der Gegendruckplatte (3) ausgebildet ist.

10. Antriebsstrang mit einer Kupplung nach einem der vorhergehenden Ansprüche und einem als Zweimassenschwungrad ausgebildeten Schnittstellenbauteil (2).

11. Verfahren zum Montieren einer Kupplung nach einem der Ansprüche 1 bis 9, **dadurch gekennzeichnet, dass** der Mitnehmerkranz (6) zum Eingehen eines Formschlusses in das Material der Gegendruckplatte (3) gedrückt wird.

## Claims

1. Clutch (1) for a motor vehicle having an interface component (2) which can be driven by internal combustion engine, having a counterpressure plate (3) which, together with a pressure plate (4), is designed for clamping in a clutch disc (5), and having a driver ring (6) which is separate at least from the counterpressure plate (3) and is designed for the transmission of torque from the interface component (2) to the counterpressure plate (3), **characterized in that** the driver ring (6) is pressed to the counterpressure plate (3) in a manner which is non-positive and free from fastening means.

2. Clutch (1) according to Claim 1, **characterized in that** there is an additional positively locking connection between the counterpressure plate (3) and the driver ring (6) .

3. Clutch (1) according to Claim 2, **characterized in that** there is a toothing system (15) between the counterpressure plate (3) and the driver ring (6), which toothing system (15) is dimensioned for the transmission of torque.

4. Clutch (1) according to Claim 3, **characterized in that** the driver ring (6) configures the toothing system (15), and/or the counterpressure plate (3) configures the toothing system (15).

5. Clutch (1) according to one of Claims 1 to 4, **characterized in that** there is a difference in hardness between the material of the counterpressure plate (3) and the material of the driver ring (6).

6. Clutch (1) according to one of Claims 1 to 5, **characterized in that** the driver ring (6) is harder than the counterpressure plate (3).

7. Clutch (1) according to one of Claims 1 to 6, **characterized in that** there is an axial thrust prevention device which is designed to impede or to prevent an axial movement of the driver ring (6) relative to the counterpressure plate (3).

8. Clutch (1) according to one of Claims 1 to 7, **characterized in that** the driver ring (6) is pushed, pressed and/or caulked into the material of the counterpressure plate (3).

9. Clutch (1) according to Claim 7 or 8, **characterized in that** the axial thrust prevention device is configured as an integral constituent part of the counterpressure plate (3).

10. Drive train having a clutch according to one of the preceding claims and an interface component (2) which is configured as a dual-mass flywheel.

11. Method for assembling a clutch according to one of Claims 1 to 9, **characterized in that** the driver ring (6) is pushed into the material of the counterpressure plate (3) in order to enter into a positively locking connection.

## Revendications

1. Embrayage (1) pour un véhicule automobile, comprenant un composant d'interface (2) pouvant être entraîné par un moteur à combustion, comprenant une plaque de contre-pression (3) qui, conjointement avec une plaque de pression (4), est conçue pour serrer un disque d'embrayage (5), et comprenant une couronne d'entraînement (6) séparée au moins par rapport à la plaque de contre-pression (3), qui est conçue pour transmettre le couple du composant d'interface (2) à la plaque de contre-pression (3), **caractérisé en ce que** la couronne d'entraînement (6) est pressée avec la plaque de contre-pression (3) par engagement par force et sans moyen de fixation.

2. Embrayage (1) selon la revendication 1, **caractérisé en ce qu'**il est prévu un engagement supplémentaire par correspondance de formes entre la plaque de contre-pression (3) et la couronne d'entraînement (6).

3. Embrayage (1) selon la revendication 2, **caractérisé en ce qu'**il est prévu une denture (15) entre la plaque de contre-pression (3) et la couronne d'entraînement (6), laquelle est dimensionnée pour transmettre le couple.

4. Embrayage (1) selon la revendication 3, **caractérisé en ce que** la couronne d'entraînement (6) constitue la denture (15) et/ou la plaque de contre-pression (3) constitue la denture (15).

5. Embrayage (1) selon l'une quelconque des revendications 1 à 4, **caractérisé en ce qu'**il existe une différence de dureté entre le matériau de la plaque de contre-pression (3) et le matériau de la couronne d'entraînement (6).

6. Embrayage (1) selon l'une quelconque des revendications 1 à 5, **caractérisé en ce que** la couronne d'entraînement (6) est plus dure que la plaque de contre-pression (3).

7. Embrayage (1) selon l'une quelconque des revendications 1 à 6, **caractérisé en ce qu'**il est prévu un dispositif empêchant la poussée axiale, lequel est conçu pour entraver ou empêcher un déplacement axial de la couronne d'entraînement (6) par rapport à la plaque de contre-pression (3) .

8. Embrayage (1) selon l'une quelconque des revendications 1 à 7, **caractérisé en ce que** la couronne d'entraînement (6) est enfoncée, pressée et/ou emboîtée dans le matériau de la plaque de contre-pression (3).

9. Embrayage (1) selon la revendication 7 ou 8, **caractérisé en ce que** le dispositif empêchant la poussée axiale est réalisé sous la forme d'un composant intégral de la plaque de contre-pression (3) .

10. Chaîne cinématique comprenant un embrayage selon l'une quelconque des revendications précédentes et un composant d'interface (2) réalisé sous forme de volant d'inertie à deux masses.

11. Procédé de montage d'un embrayage selon l'une quelconque des revendications 1 à 9, **caractérisé en ce que** la couronne d'entraînement (6) est pressée dans le matériau de la plaque de contre-pression (3) pour réaliser un engagement par correspondance de formes.
